# EUROPEAN PATENT APPLICATION

(11) **EP 3 492 425 A1**
(43) Date of publication of application: **05.06.2019**
(21) Application number: 17204974.4
(22) Date of filing: 01.12.2017
(51) Int. Cl.: C01B 3/36, C10J 3/76, F23D 11/36, F23D 14/78

(54) **PARTIAL-OXIDATION BURNER**

(71) Applicant: L'AIR LIQUIDE, SOCIETE ANONYME POUR L'ETUDE ET L'EXPLOITATION DES PROCEDES GEORGES CLAUDE, 75007 Paris (FR); Air Liquide Deutschland GmbH, 40235 Düsseldorf (DE)
(72) Inventor: SAUER, Peter, 21717 FREDENBECK (DE)
(74) Representative: De Vleeschauwer, Natalie Y.L.D.

(57) **Abstract**

Burner for the partial oxidation of a hydrocarbon fuel and use of said burner for same, whereby the burner presents an annular cooling chamber 30 which reaches up to the downstream face 50 and which surrounds and defines the injection opening 40 of the burner, said annular cooling chamber 30 being formed by the welding of an annular metal profile 50 to the outer conduit 10 of the burner by means of a first welding seam 61 and a more downstream second welding seam 62, a cooling fluid feed pipe 70 and a cooling fluid evacuation pipe 80 being fluidly connected to the annular cooling chamber 30 in such a way that the second welding seam 62 is located in an area of the outer conduit 10 which is surrounded by coils 71, 81 of the cooling fluid feed pipe 70 and/or the cooling fluid evacuation pipe 80.

## Description

The present invention relates to a partial-oxidation burner.

Synthesis gas (in short: syngas) is a gas consisting mainly of hydrogen (H2) and carbon monoxide (CO). It is useful as a synthetic fuel and as a starting material for chemical synthesis processes.

It is known in the art to produce syngas through partial oxidation of a hydrocarbon fuel. Thereto, the hydrocarbon fuel and a free-oxygen (O₂) containing oxidant gas are introduced into a reactor by means of one or more partial-oxidation burners. Optionally, other reactants, such as steam or carbon dioxide may also be introduced into the reactor. Inside the reactor, the fuel is partially combusted by means of the oxidant gas at temperatures which often exceed 1000°C, whereby CO and H₂ are formed.

Due to the high temperatures inside the reactor, the partial-oxidation burners, and in particular the parts of said burners which extend into the reactor, are subjected to high thermal, chemical and mechanical stresses which can cause rapid damage to and failure of the burners.

In order to reduce the stress to the burner, partial oxidation burners are generally equipped with a cooling chamber which surrounds the downstream injection opening of the burner. A supply pipe is used to transport cooling fluid, typically water, to the cooling chamber and an evacuation pipe is used to evacuate said cooling fluid from the cooling chamber. To the extent that the supply pipe and/or the evacuation pipe are coiled around the downstream end of the burner, cooling is also provided for said downstream end upstream of the cooling chamber.

One particular arrangement for such a cooling chamber is known from US-A-2010/0037613. According to said arrangement, a fuel injector tip is manufactured separately from the upstream part of a fuel injector.

The tip comprises a base that includes a cooling channel, a first transition member for feeding cooling fluid into the cooling chamber and a second transition member for evacuating cooling fluid from the cooling chamber. The two transition members extend outwardly from the cooling chamber and may take the form of pipe elbows.

The fuel injector tip comprises an annular mounting flange by means of which the tip is coupled to the upstream part of the fuel injector. The cooling channel extends substantially up to said mounting flange.

A cooling assembly is also coupled to the upstream part of the fuel injector. Said cooling assembly is coupled to the first and second outwardly extending transition members of the tip so as to channel a flow of cooling fluid through the cooling channel via the first transition member and so as to evacuate said flow of cooling fluid from the cooling channel via the second transition member. The cooling assembly comprises cooling fluid transfer lines which are coiled around the upstream part of the fuel injector and which do not extend to the tip which is attached to said upstream part. According to US-A-2010/0037613, the cooling channel, the first transition member and the second transition member are formed integrally together. No information is provided regarding the manner in which these three integrally formed parts are produced, nor as to how the cooling channel itself is produced.

Although this arrangement can be effective for providing cooling for the burner tip, rapid burner failure is observed in practice. The connection between the injector tip and the upstream part of the fuel injector tends to fail rapidly, causing the burner to become partially or totally disconnected from the main injector body. This can in turn cause the transition members to become partially or totally disconnected from the cooling assembly, causing catastrophic failure of the burner. Cooling chambers produced by assembling multiple annularly profiled pieces are known from inter alia GB-A-1404619.

In these cases, the cooling chamber is manufactured by attaching an annular metal profile to the downstream end of an outer conduit of the partial oxidation burner by means of two annular sealing welds so that an annular cooling chamber which extends outwardly from said outer conduit and which surrounds and defines the outlet opening of the burner is formed as an annular space between the downstream end of the outer conduit and the metal profile.

The downstream end of the outer conduit, to which the metal profile is attached, may have different profiles and may form a larger or smaller portion of the walls of the cooling chamber. For example, the downstream end of the outer conduit may extend up to or stop short of the downstream injection opening. Likewise, the annular sealing welds connecting the metal profile to the downstream end of the outer conduit may have different locations.

These partial oxidation burners present the advantage that the cooling chamber is attached more solidly to the outer conduit of the burner by means of two instead of only one annular connection. The cooling chamber is connected to a cooling fluid supply pipe via an inlet opening of the cooling chamber and to a cooling fluid evacuation pipe via an outlet opening of the cooling chamber. The cooling fluid supply pipe and/or the cooling fluid evacuation pipe may be coiled around the outer conduit of the burner. Due to the inlet opening and the outlet opening, the cooling chamber is not or only partially (i.e. over less than 360°) surrounded by the inlet pipe and/or the outlet pipe. According to GB-A-1404619, the welds connecting the metal profile to the downstream end of the outer conduit are preferably not located in the outermost face of the burner where they would be directly exposed to the radiant heat from the reaction zone and from the refractory lining surrounding the reaction zone.

According to GB-A-1404619, this enables the life of the burner to be extended to more than 100 days in comparison with an average life of 20 to 30 days for earlier conventional burners.

It was again found that the area immediately upstream of the cooling chamber was particularly susceptible to stress and damage. In particular, significant loss of material, including perforation, of the outer conduit of the burner was observed in this area.

It will be appreciated that every failure of the partial oxidation burner causes significant down time of the reactor and loss of production. Burner failure also constitutes a safety risk.

There therefore remains an important need for further extending the life of partial oxidation burners.

It is an aim of the present invention to provide such a partial oxidation burner with an extended life.

Thereto, the present invention proposes a new partial oxidation burner.

The partial oxidation burner of the present invention extends along a longitudinal axis from an upstream end to a downstream face. The downstream face of the burner presents an injection opening for injecting hydrocarbon fuel and free-oxygen containing oxidant gas into a reaction zone downstream of the injection opening.

During operation of the partial oxidation burner, the hydrocarbon fuel and the oxidant gas, collectively also known as the combustion reactants, flow from the upstream end of the burner towards and through the injection opening in the downstream face of the burner. In the present context, and unless indicated otherwise, the terms "upstream" and "downstream" are to be interpreted with respect to said flow direction of these combustion reactants.

The burner further comprises a tubular metallic outer conduit having an inner surface and an outer surface and extending along the longitudinal axis from the upstream end of the burner to an annular downstream rim.

The burner typically comprises additional parts inside the outer conduit, such as inner walls defining individual injectors for fuel, oxidant gas, CO₂ or steam, etc. Further information regarding the nature and position of these additional parts is available from technical literature, etc. and need not be discussed in detail in the context of the present invention.

The burner of the invention also includes an annular cooling chamber. The cooling chamber surrounds and defines the injection opening. It has a height H in the direction of the longitudinal axis and reaches up to the downstream face of the burner. The cooling chamber extends outwardly from the outer surface of the outer conduit. It is formed by welding of an annular metal profile to the outer conduit. This metal profile extends between an annular first edge and an annular second edge. The first edge is welded to the downstream rim of the outer conduit by an annular sealing first welding seam. The second edge of the metal profile is welded to the outer surface of the outer conduit at a distance from and upstream of the downstream rim of the outer conduit by an annular sealing second welding seam.

The cooling chamber is thus assembled from only two parts: the outer conduit and the metal profile by means of only two annular sealing welding seams. This does not exclude the presence of other welding seams in the outer conduit upstream of the cooling chamber.

In accordance with the invention, the metal profile presents a lateral inlet opening for feeding cooling fluid to the cooling chamber and a lateral outlet opening for evacuating cooling fluid from the cooling chamber.

A cooling fluid feed pipe is fluidly connected to the inlet opening and a cooling fluid evacuation pipe is fluidly connected to the outlet opening. At least one of the cooling fluid feed pipe and the cooling fluid evacuation pipe present a number of coils which surround the outer surface of the outer conduit over 360°, i.e. over the entire outer circumference of the cross section of the outer conduit.

In accordance with the present invention, the second welding seam, by which the second edge of the metal profile is welded to the outer surface of the outer conduit, is located at an upstream end of or upstream of the cooling chamber in an area of the outer surface of the outer conduit which is surrounded over 360° by the coils of the cooling fluid feed pipe and/or the cooling fluid evacuation pipe.

According to a preferred embodiment of the invention, the height H of the cooling chamber is greater than a diameter Di of the inlet opening and/or than a diameter Do of the outlet opening. The height H of the cooling chamber is preferably at least 20% and preferably by at least 25% greater than the diameter of the inlet opening and/or of the outlet opening. Typically, the height H of the cooling chamber is greater than both the diameter Di of the inlet opening and the diameter Do of the outlet opening. Diameters Di and Do are usually identical.

Typically, the cooling chamber is designed so that it extends further upstream than the inlet opening and/or the outlet opening, i.e. the upper end of the cooling chamber is located upstream of the inlet opening and/or of the outlet opening. Preferably, the cooling chamber extends further upstream than both the inlet opening and the outlet opening.

It is generally of interest for the inner surface of the outer conduit to narrow towards the downstream rim of the outer conduit, i.e. towards the injection opening of the burner.

According to one embodiment of the burner, the downstream rim of the outer conduit and the first welding seam are located in the downstream face of the burner. According to a preferred embodiment, however, the downstream rim of the outer conduit and the first welding seam are located upstream of the downstream face. In that case, the thermal stress to which the first welding seam is subjected is much reduced as the first welding seam is then not exposed to heat radiation from the reaction zone.

It was found that by having the annular second edge of the metal profile contiguous with the outer surface of the outer conduct adjacent the second welding seam, the quality and durability of the annular sealing second welding seam could be substantially improved. In that case, the inner surface of the annular profile leans against the outer surface of the outer conduit next to the second welding seam by which the second edge of the metal profile is attached to outer conduct.

By way of additional reinforcement of the connection of the cooling fluid feed pipe, respectively of the cooling fluid evacuation pipe to the cooling chamber, the burner may further comprise:
- an inlet sleeve which extends from the inlet opening and away from the cooling chamber and into which the cooling fluid feed pipe extends,
   and/or
- an outlet sleeve which extends from the outlet opening and away from the cooling chamber and into which the cooling fluid evacuation pipe extends.

In that case, a rim or studs at or near the inlet opening, respectively the outlet opening advantageously prevent the cooling fluid feed pipe, respectively the cooling fluid evacuation pipe, from being inserted into the cooling chamber beyond the inlet opening, respectively the outlet opening. During assembly of the burner, an expansion gap is then preferably provided between the end of the cooling fluid feed pipe and said rim or studs, respectively between the end of the cooling fluid outlet pipe and the corresponding rim or studs.

For example, the cooling fluid feed pipe may thus advantageously be connected to the inlet opening of the cooling chamber by means of a socket weld, whereby the inlet sleeve which extends from said inlet opening constitutes a socket weld flange into which the terminal end of the cooling fluid feed pipe is inserted, after which the outer surface of the cooling fluid inlet pipe is welded to the inlet sleeve. Similarly, the cooling fluid evacuation pipe may thus advantageously be connected to the outlet opening of the cooling chamber by means of a socket weld, whereby the outlet sleeve which extends from said outlet opening constitutes a socket weld flange into which the terminal end of the cooling fluid evacuation pipe is inserted, after which the outer surface of the cooling fluid evacuation pipe is welded to the outlet sleeve. Preferably, the inlet sleeve, respectively the outlet sleeve, are designed so as to achieve a tight fit between the inlet sleeve and the cooling fluid feed pipe, respectively between the outlet sleeve and the cooling fluid evacuation pipe, thus reducing the risk of leaking of the cooling fluid into the reactor.

Typically, the inner diameter of the inlet sleeve will be substantially equal to the outer diameter of the extremity of the cooling fluid feed pipe which extends into the inlet sleeve so as to ensure a tight fit between the inlet sleeve and the feed pipe.

Similarly, the inner diameter of the outlet sleeve will typically be substantially equal to the outer diameter of the extremity of the cooling fluid evacuation pipe which extends into the outlet sleeve. The inlet sleeve and the outlet sleeve may advantageously be integrally formed with the metal profile, i.e. the metal profile and the sleeve(s) are formed in one piece as opposed to assembled together. Contrary to assembled pieces, integrally formed pieces do not present assembly seams, which are a potential source of mechanical or chemical weakness in assembled pieces.

The cooling fluid feed pipe may be welded into position at the free end of the inlet sleeve. Similarly, the cooling fluid evacuation pipe may be welded into position at the free end of the outlet sleeve.

In order to maximize the cooling by means of the cooling fluid of the downstream face of the burner which directly faces the reaction zone, the inlet opening and/or the outlet opening of the cooling chamber are advantageously positioned adjacent the downstream face of the burner.

According to a preferred embodiment of the invention, the coils of the cooling fluid feed pipe and/or of the cooling fluid evacuation pipe present a constant pitch between successive coils, i.e. a constant distance between the coils in the direction of the longitudinal axis of the burner. According to alternative embodiments, the pitch between successive coils of the cooling fluid feed pipe and/or of the cooling fluid evacuation pipe may vary along axis X-X, in particular in order to take into account the cooling requirements for the burner at different points along said axis X-X. For example, the cooling fluid feed pipe may present coils with a smaller pitch nearer to the downstream face of the burner.

According to a preferred embodiment, the effectiveness of the cooling chamber is increased in that at least part of the outer conduit between the downstream rim of the outer conduit and the second welding seam has a wall thickness which is smaller than the wall thickness of the outer conduit upstream of the second welding seam.

The outer surface of the outer conduit of the burner may advantageously present an annular recess where the second edge of the metal profile is attached to the outer surface, in particular a stepwise annular recess. In that case, the metal profile is advantageously contiguous with the outer surface of the outer conduit in said recess adjacent the second welding seam. In this manner, a second welding seam in the form of a joggle joint weld may be achieved.

For the sake of increased reliability of the cooling system, the cooling fluid feed pipe is preferably formed in one piece and does not present any seams. The same is true for the cooling fluid evacuation pipe.

The outer conduit and the metal profile are ideally made of metallurgically similar (in German: "artgleiche") metals (including alloys) and preferably out of the same metal. This is useful for increasing the solidity and the durability of the first and the second welding seam. Likewise, the cooling fluid feed pipe and the cooling fluid evacuation pipe are preferably made out of metallurgically similar metals and more preferably out of the same metal as the metal profile. For example, the outer conduit and the metal profile may both be made out of the same high-carbon nickel-chromium-iron alloy 602 CA and the cooling fluid feed pipe and evacuation pipe may be made out of the metallurgically similar austenitic nickel-chromium-based alloy Inconel 600.

In the present context, two metals are considered metallurgically similar when they have identical ASME P numbers (reference being made to the P-numbers of the American Society of Mechanical Engineers (ASME) Boiler & Pressure Vessel Code (BPVC)) and/or metals belonging to the same group, and more preferably to the same subgroup (when present) of the TR 151508 ISO/TR 15608 2017 norm,

In order to further protect the burner from thermal stress, an incombustible thermally insulating envelope my surround the burner. The burner may thus, for example, be surrounded by a gypsum envelope.

The present invention also relates to a method of assembling a partial oxidation burner according to one of the embodiments described above. The method includes the steps of:
- providing a burner body with a tubular metallic outer conduit having an inner surface and an outer surface and extending along a longitudinal axis from an upstream end to an annular downstream rim;
- providing an annular metal profile which extends between an annular first edge and an annular second edge, whereby the annular profile presents or is provided with an inlet opening with a diameter Di for feeding cooling fluid to the cooling chamber and an outlet opening with a diameter Do,
- welding said metal profile to the outer conduit, whereby the first edge of the metal profile is welded to the downstream rim of the outer conduit by an annular sealing first welding seam and welding the second edge of the metal profile to the outer surface of the outer conduit at a distance from and upstream of the downstream rim of the outer conduit by an annular sealing second welding seam so as to form between the outer conduit and the metal profile an annular cooling chamber with a height H in the direction of the longitudinal axis, which extends outwardly from the outer surface of the outer conduit and which defines and surrounds a downstream injection opening of in a terminal downstream face of the burner;
- providing a cooling fluid feed pipe and a cooling fluid evacuation pipe of which at least one presents a number of coils, fluidly connecting the cooling fluid feed pipe to an inlet opening in the metal profile having a diameter Di, fluidly connecting the cooling fluid evacuation pipe to an outlet opening in the metal profile having a diameter Do and this in such a way that the coils surround the outer surface of the outer conduit over 360°;

In accordance with the present invention, the second welding seam, by which the second edge of the metal profile is welded to the outer surface of the outer conduit, is located at an upstream end of the cooling chamber or upstream of the upstream end of the cooling chamber in an area of the outer surface of the outer conduit which is surrounded over 360° by the coils of the cooling fluid feed pipe and/or the cooling fluid evacuation pipe.

The inlet opening and the outlet opening may be provided in the metal profile before or after the metal profile is welded to the outer conduit of the burner.

The features of the different specific embodiments of the burner according to the invention can also be applied to the assembly method according to the invention.

The invention further relates to a partial oxidation reactor defining a reaction zone therein and which is equipped with at least one partial oxidation burner according to any one of the embodiments described hereinabove, each partial oxidation burner being mounted in the reactor so that the injection opening of the burner opens into the reaction zone of the reactor.

According to a particularly useful embodiment of the invention, the at least one partial oxidation burner is mounted in a roof of the reactor with the injection opening of the burner pointing downwards towards the reaction zone.

For the operation of the partial oxidation reactor, the partial oxidation burner is fluidly connected to a source of hydrocarbon fuel and to a source of free-oxygen containing oxidant gas.

The partial oxidation burner or burners of the reactor of the invention may correspond to any one of the different specific embodiments of the burner according to the invention as described hereinabove.

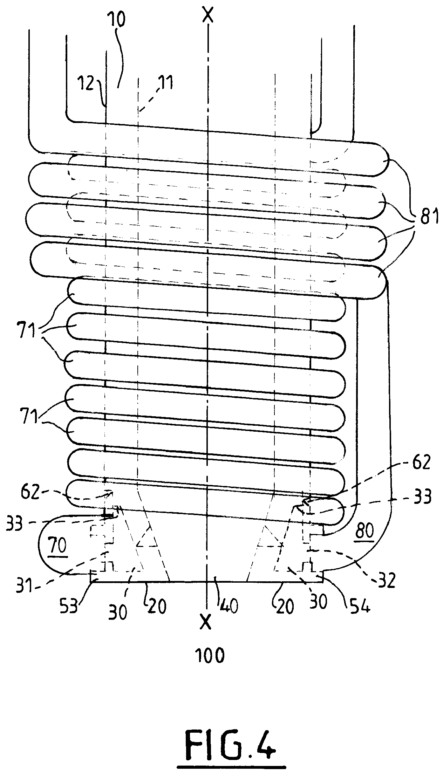

The present invention and its advantages are illustrated in the following example, reference being made to figures 1 to 4, whereby:
- figure 1 is a schematic cross-section view of the outer part of the downstream end of a partial oxidation burner according to a first embodiment of the invention,
- figure 2 is a schematic cross-section view of the outer part of the downstream end of a partial oxidation burner according to a second embodiment of the invention,
- figure 3 is a schematic frontal view of the outer part of the downstream end of the partial oxidation burner of figure 1,
- figure 4 is a schematic side view of the downstream end of a partial oxidation burner of figure 1.

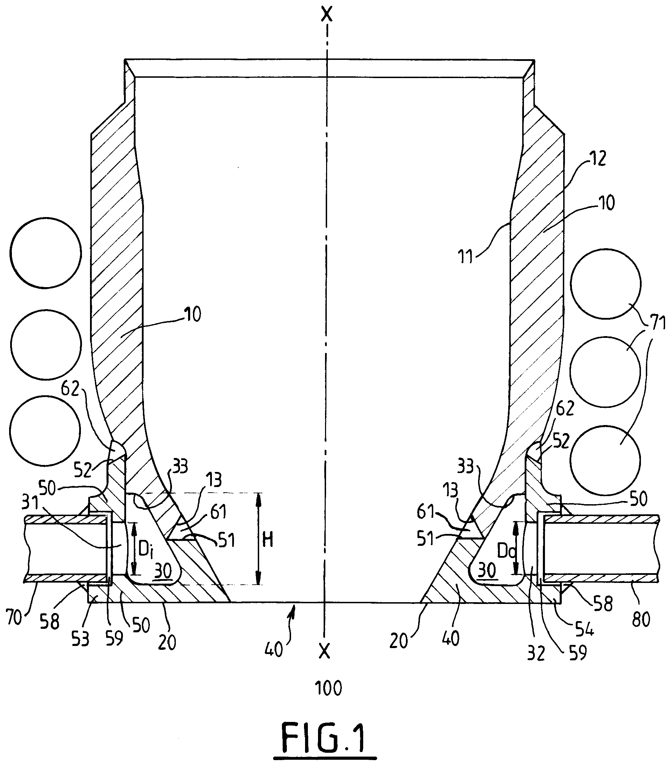

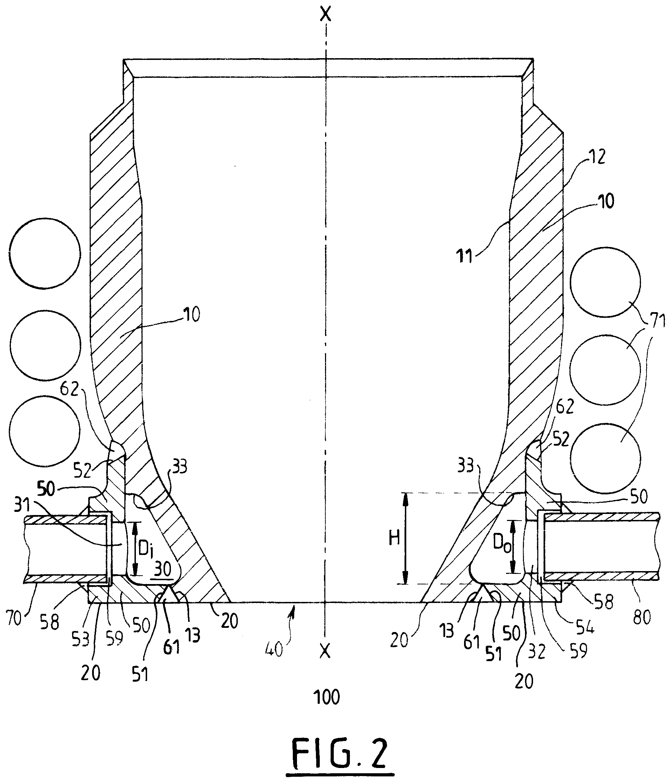

As shown in the figures, the partial oxidation burner of the invention comprises a tubular metallic outer conduit 10 which extends along the longitudinal axis X-X of the burner. The outer conduit 10 has an inner surface 11 and an outer surface 12. The outer conduit 10 terminates in an annular downstream rim 13. In the preferred embodiment illustrated in figure 1, the outer conduit 10 stops short of the downstream face 20 of the burner which, during burner operation, faces the reaction zone of the reactor in which the burner is mounted. In the alternative embodiment illustrated in figure 2, outer conduit extends up to the downstream face 20 of the burner so that its downstream rim 13 is located in the downstream face 20 of the burner.

An annular cooling chamber 30 with a height H in the direction of the longitudinal axis X-X surrounds and defines the downstream injection opening 40 of the burner in the downstream face 20 of the burner. Said cooling chamber 30 extends outwardly from the outer surface 12 of the outer conduit 10.

The annular cooling chamber 30 is formed by the welding of an annular metal profile 50 to the outer conduit 10. Metal profile 50 extends between an annular first edge 51 and an annular second edge 52. First edge 51 is welded by an annular sealing first welding seam 61 to the downstream rim 13 of the outer conduit 10. Second edge 53 is welded by an annular sealing second welding seam 62 to the outer surface 12 of the outer conduit 10 upstream of cooling chamber 30, i.e. upstream of the upstream end 33 of the cooling chamber. In the embodiments illustrated in figures 1 and 2, the second welding seam is in the form or a joggle joint welding seam.

Only two parts (the outer conduit 10 and the metal profile 50) and only two welding seams (first welding seam 61 and second welding seam 62) are thus required to form the cooling chamber. The outer conduit may, however, present other welding seams further upstream of the cooling chamber, for example when the burner comprises a downstream burner tip which is welded to the upstream end of the burner.

As indicated above, the outer conduit 10 and the metal profile 50 are preferably made out of metallurgically similar metals, preferably of the same metal. Suitable alloys for both the outer conduit 10 and the metal profile 50 is, for example, the 602 CA alloy.

In the embodiment illustrated in figure 2, first welding seam 61 is located upstream of the downstream face 20 of the burner and is therefore not directly exposed to heat convection and radiation from reaction zone 100. As welding seams are generally more susceptible to thermal and other stress, the embodiment of figure 1 is preferred over the embodiment shown in figure 2, whereby the first welding seam 61 is located in downstream face 20 and therefore directly faces reaction zone 100.

Cooling chamber 30 presents an inlet opening 31 with a diameter Di for the supply of cooling fluid to be fed to the cooling chamber 30 and an outlet opening 32 with a diameter Do for the evacuation of cooling fluid from the cooling chamber 30. Said inlet opening 31 and outlet opening 32 are located in metal profile 50. Openings 31 and 32 may be present in the metal profile before it is welded to outer conduit 10. Alternatively, openings 31 and 32 may be made in the outer profile 50 after it has been welded to the outer conduit 10.A cooling fluid feed pipe 70 is fluidly connected to inlet opening 31 and a cooling fluid evacuation pipe 80 is fluidly connected to outlet opening 32. The inner diameter of feed pipe 70 advantageously corresponds to the diameter Di of the inlet opening 31 and the inner diameter of the evacuation pipe 80 preferably has an inner diameter corresponding to the diameter Do of the outlet opening 32. Cooling fluid feed pipe 70 presents coils 71 which surround the outer conduit 10 over 360° and which extend along the entire downstream end of the outer conduit up to cooling chamber 30. Cooling fluid evacuation pipe 80 presents a smaller number of coils 81, which likewise surround outer conduit 10 over 360°, but all of said coils 81 are located at a distance from cooling chamber 30 towards the upstream end of the burner.

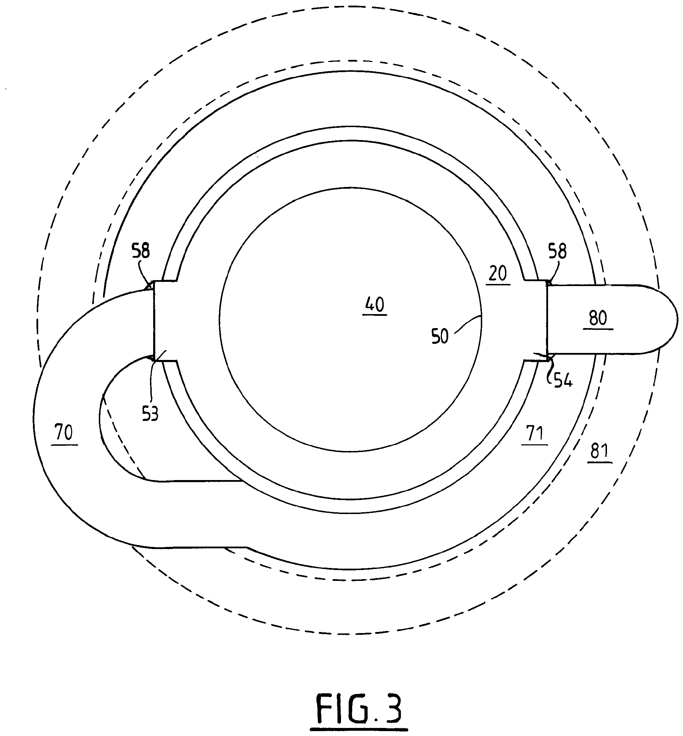

In the embodiments illustrated in figures 1 to 3, cooling fluid feed pipe 70 and cooling fluid evacuation pipe 80 are connected to cooling chamber 30 by means of a socket weld.

A short metal inlet sleeve 53 and a short metal outlet sleeve 54 having an inner diameter corresponding respectively to the outer diameter of feed pipe 70 and to outer diameter of evacuation pipe 80 extend outwardly from the cooling chamber 30 respectively at the inlet opening 31 and at the outlet opening 32 of cooling chamber 53. Said inlet sleeve 53 and said outlet sleeve 54 are preferably made out of metals which are "artgleich" or identical to the metal of the metal profile presenting the inlet opening 31 and the outlet opening 32. Thus, when metal profile 50 is made of 602 CA alloy, the inlet sleeve 53 and the outlet sleeve 54 may also be made out of the 602 CA alloy. Feed pipe 70 is inserted into inlet sleeve 53 so that an expansion gap 59 remains between the terminal end of feed pipe 70 and the rim of inlet opening 31 and evacuation pipe 80 is inserted into outlet sleeve 54 so that, similarly, an expansion gap 59 remains between the terminal end of evacuation pipe 80 rand the rim of outlet opening 32. By providing such an expansion gap, potentially damaging mechanical stress on the welding seams 58 connecting the outer surface of feed pipe 70 to the free extremity of inlet sleeve 53, respectively the outer surface of evacuation pipe 80 to the free extremity of outlet sleeve 54. Feed pipe 70 and evacuation pipe 80 preferably have identical inner and outer diameters.

By using welding compatible, preferably metallurgically similar and more preferably the same heat-resistant metal for metal profile 20, for outer conduit 10 (or at least for the downstream end of the outer conduit 10 to which metal profile 20 is welded) and for inlet pipe 70 and outlet pipe 80, it is possible to reduce the risk of stress damage where the pieces are welded together and in the vicinity of the corresponding welding seams.

It will be apparent from the figures that, due to the lateral position of cooling fluid inlet opening 31 and outlet opening 32, cooling chamber 30 is not or, at most, only partially, i.e. over less than 360°, surrounded by any coils 71, 81.

As illustrated in figures 1 and 2, the second welding seam 62 is located in an area of the outer surface 12 of the outer conduit 10 which is surrounded over 360° by the coils 71 of the cooling fluid feed pipe 70. Alternatively, or in addition, the area of outer surface 20 in which second welding seam 62 is located may (also) be surrounded over 360° by the coils 81 of cooling fluid evacuation pipe 80. During burner operation, coils 71 and/or 81 thus protect said area against heat and radiation from the downstream reaction zone 100.

In the illustrated embodiments, second welding seam 62 is spaced apart from upstream end 33 of cooling chamber 30. Said second welding seam 62 may also be located at the upstream end 33 of cooling chamber 30, when the height H of cooling chamber 30 is sufficiently great so that a second welding seam 62 located at the upstream end of cooling chamber 30 would be surrounded over 360° by the coils 71 of the cooling fluid feed pipe 70 and/or by the coils 81 of the cooling fluid evacuation pipe 80.

During operation of the burner, a hydrocarbon fuel and a free-oxygen containing oxidant gas are injected into the downstream reaction zone 100 via outlet opening 40 of the burner. Thereto the burner is provided with equipment for feeding hydrocarbon fuel and oxidant gas to the burner and for transporting said hydrocarbon fuel and oxidant separately or totally or partially mixed to the outlet opening 40 of the burner. Inside reaction zone 100 of the partial oxidation reactor, the hydrocarbon fuel is partially combusted with the oxidant gas and hydrogen (H2) and carbon monoxide (CO) are thereby generated in the reactor. The partial oxidation also generates high temperatures inside reaction zone 100, so that the downstream part of the burner, which extends into the reactor, is exposed high levels of heat convection and radiation, in addition to potentially corrosive elements present in the atmosphere of the reaction zone 100.

As indicated above, partial combustion burners had been developed, prior to the present invention, which could remain in operation for up to 100 days.

It was found that, under the same partial-combustion operation conditions, the burner according to the present invention could operate for up to two years and even for more than two years and even up to three years without significant stress damage to the burner, so that even longer safe operation periods appear to be possible.

Such a remarkable increase in the lifetime of the partial oxidation burner significantly lowers the costs, both as regards materials and labour, of generating syngas by means of partial oxidation.

## Claims

1. Partial oxidation burner extending along a longitudinal axis X-X from an upstream end to a downstream face (50) with an injection opening (40) for injecting hydrocarbon fuel and free oxygen containing oxidant gas into a reaction zone (100) downstream of the injection opening (40), the burner further comprising:
• a tubular metallic outer conduit (10) having an inner surface (11) and an outer surface (12) and extending along the longitudinal axis X-X from the upstream end of the burner to an annular downstream rim (13),
• an annular cooling chamber (30) which has a height H in the direction of the longitudinal axis X-X, which reaches up to the downstream face (50) of the burner and which surrounds and defines the injection opening (40) and which extends outwardly from the outer surface (12) of the outer conduit (10), whereby the annular cooling chamber (30) is formed by welding of an annular metal profile (50) to the outer conduit (10), the metal profile extending between an annular first edge (51) and an annular second edge (52), the first edge (51) being welded by an annular sealing first welding seam (61) to the downstream rim (13) of the outer conduit (10) and the second edge (52) being welded by an annular sealing second welding seam (62) to the outer surface (12) of the of the outer conduit (10) at a distance from and upstream of the downstream rim 13 of the outer conduit (10), the cooling chamber (30) being delimited at the downstream end by the downstream face (20) of the burner, the metal profile (50) further presenting a lateral inlet opening (31) with a diameter Di for feeding cooling fluid to the cooling chamber (30) and a lateral outlet opening (32) with a diameter Do for evacuating cooling fluid from the cooling chamber (30),
• a cooling fluid feed pipe (70) fluidly connected to the inlet opening (31) and a cooling fluid evacuation pipe (80) fluidly connected to the outlet opening (32), at least one of the cooling fluid feed pipe (70) and the cooling fluid evacuation pipe (80) presenting a number of coils (71, 81) which surround the outer surface (12) of the outer conduit (10) over 360°,
whereby:
• the second welding seam (62) is located at an upstream end (33) of the cooling chamber (30) or upstream of the upstream end (33) of the cooling chamber (30) in an area of the outer surface (12) of the outer conduit (10) which is surrounded over 360° by the coils (71, 81) of the cooling fluid feed pipe (70) and/or the cooling fluid evacuation pipe (80).

2. Burner according to claim 1, whereby the height H of the cooling chamber (30) is greater than diameter Di of the inlet opening (31) and/or than diameter Do of the outlet opening (32).

3. Burner according to claim 1 or 2, whereby the second edge (52) of the annular profile (50) is contiguous with the outer surface (12) of the outer conduct (10) adjacent the second welding seam (62).

4. Burner according to any one of the preceding claims, whereby the downstream rim (13) of the outer conduit (10) and the first welding seam (61) are located upstream of the downstream face (50) of the burner.

5. Burner according to any one of the preceding claims, further comprising:
• an inlet sleeve (53) extending from the inlet opening (31) and away from the cooling chamber (30) and whereby the cooling fluid feed pipe (70) extends into said inlet sleeve (53) and/or
• an outlet sleeve (54) extending from the outlet opening (32) and away from the cooling chamber (30) and whereby cooling fluid evacuation pipe (80) extends into said outlet sleeve (54).

6. Burner according to any one of the preceding claims, whereby the inlet opening (31) and/or the outlet opening (32) are adjacent the downstream face (50) of the burner.

7. Burner according to any one of the preceding claims, whereby the height H of the cooling chamber (30) is preferably at least 20% and preferably by at least 25% greater than the diameter Di of the inlet opening (31) and/or of the diameter Do of the outlet opening (32) of the cooling chamber (30).

8. Burner according to any one of the preceding claims, whereby the coils (71, 81) of the cooling fluid feed pipe (70) and/or of the cooling fluid evacuation pipe (80) present a constant pitch between successive coils (71, 81).

9. Burner according to any one of the preceding claims, whereby the cooling fluid feed pipe (70) and/or the cooling fluid evacuation pipe (80) are integrally formed

10. Partial oxidation burner according to any one of the preceding claims, whereby the outer conduit (10) and the metallic annular profile (50) and preferably also the cooling fluid feed pipe (70) and the cooling fluid evacuation pipe (80) are made out of metallurgically similar and preferably out of the same metal.

11. Burner according to any one of the preceding claims, whereby the burner is surrounded by a thermally insulating envelope.

12. Method of assembling a burner according to any one of the preceding claims, comprising the steps of:
• providing a burner body with a tubular metallic outer conduit (10) having an inner surface (11) and an outer surface (12) and extending along a longitudinal axis X-X from an upstream end to an annular downstream rim (13);
• providing an annular metal profile (50) which extends between an annular first edge (51) and an annular second edge (52),
• welding said metal profile (50) to the outer conduit (10), whereby the first edge (51) of the metal profile (50) is welded to the downstream rim (13) of the outer conduit (10) by an annular sealing first welding seam (61) and welding the second edge (52) of the metal profile (50) to the outer surface (12) of the outer conduit (10) at a distance from and upstream of the downstream rim (13) of the outer conduit (10) by an annular sealing second welding seam (62) so as to form between the outer conduit (10) and the metal profile (50) an annular cooling chamber (30) with a height H in the direction of the longitudinal axis X-X, which extends outwardly from the outer surface (12) of the outer conduit (10) and which defines and surrounds a downstream injection opening (40) in a terminal downstream face (20) of the burner; and
• providing a cooling fluid feed pipe (70) and a cooling fluid evacuation pipe (80) of which at least one presents a number of coils (71, 81), fluidly connecting the cooling fluid feed pipe (70) to a lateral inlet opening (31) of the cooling chamber (30) located in the metal profile (50), said inlet opening having a diameter Di, and fluidly connecting the cooling fluid evacuation pipe (80) to a lateral outlet opening (32) of the cooling chamber (30) located in the metal profile (50), said outlet opening having a diameter Do, this in such a way that the coils (71, 81) surround the outer surface of the outer conduit over 360°;
**characterized in that**:
• the second welding seam (62) is located at an upstream end (33) of the cooling chamber (30) or upstream of the upstream end (33) of the cooling chamber (30) in an area of the outer surface (12) of the outer conduit (10) which is surrounded over 360° by the coils (71) of the cooling fluid feed pipe (70) and/or by the coils (81) the cooling fluid evacuation pipe (80).

13. Partial oxidation reactor defining a reaction zone (100) therein and equipped with at least one partial oxidation burner according to any one of claims 1 to 11, whereby the at least one burner is mounted in the reactor so that the injection opening (40) of the burner opens into the reaction zone (100) of the reactor.

14. Partial oxidation reactor according to claim 13, whereby the at least one partial oxidation burner is mounted in a roof of the reactor with the injection opening (40) of the burner pointing downwards towards the reaction zone (100).

15. Use of the partial oxidation burner according to any one of claims 1 to 11 and/or the partial oxidation reactor according to claims 13 or 14 to produce a synthesis gas product from a feed comprising a carbonaceous fuel, preferably natural gas, and a free oxygen comprising oxidant.
